(19) Europäisches Patentamt
European Patent Office
Office européen des brevets

(11) **EP 0 478 786 B1**

(12) **EUROPEAN PATENT SPECIFICATION**

(45) Date of publication and mention
of the grant of the patent:
**18.09.1996  Bulletin 1996/38**

(21) Application number: **91905901.4**

(22) Date of filing: **22.03.1991**

(51) Int Cl.⁶: **G11B 11/10**

(86) International application number:
**PCT/JP91/00378**

(87) International publication number:
**WO 91/15013 (03.10.1991 Gazette 1991/23)**

(54) **MAGNETOOPTIC RECORDING MEDIUM, AND METHOD OF MAGNETOOPTIC RECORDING AND REPRODUCTION**

Magnetooptisches Aufzeichnungsmedium, und Verfahren zur magnetooptischen Aufzeichnung und Wiedergabe

SUPPORT D'ENREGISTREMENT MAGNETO-OPTIQUE, ET PROCEDE D'ENREGISTREMENT ET DE REPRODUCTION MAGNETO-OPTIQUE

(84) Designated Contracting States:
**DE FR**

(30) Priority: **24.03.1990  JP  74137/90**

(43) Date of publication of application:
**08.04.1992  Bulletin 1992/15**

(73) Proprietor: **SEIKO EPSON CORPORATION
Shinjuku-ku Tokyo 163 (JP)**

(72) Inventor: **KAWASE, Takeo, 3-5, Owa 3-chome
Nagano-ken 392 (JP)**

(74) Representative: **Hoffmann, Eckart, Dipl.-Ing. et al
Patentanwalt,
Bahnhofstrasse 103
82166 Gräfelfing (DE)**

(56) References cited:
| | |
|---|---|
| **JP-A- 1 149 245** | **JP-A- 5 841 451** |
| **JP-A- 5 848 249** | **JP-A- 5 922 252** |
| **JP-A-61 107 502** | **JP-A-61 107 503** |
| **JP-A-61 107 553** | **JP-A-63 276 731** |

**Description**

Technical Field:

The present invention relates to a magneto-optical recording medium for reproducing the information from an angle of a polarizing plane by irradiation of a beam, an magneto-optical reproducing method and further a magneto-optical recording method.

Background Arts:

A magneto-optical information recording medium for recording/reproducing the information by irradiating a recording film with a convergent beam is conceived as a large capacity storage medium. In particular, a magneto-optical disk which uses a rare-earth metal - transition metal amorphous alloy for a recording layer is utilized as an erasable large capacity recording medium. The recording films of the rare-earth metal - transition metal amorphous alloy has a large perpendicular magnetic anisotropy. Magnetization is effected upwards or downwards on the film plane. When irradiating this film surface with a linearly polarized beam, a polarizing plane of the reflected light rotates through $+ \theta k$ or $- \theta k$ depending on an orientation of magnetization. This phenomenon is known as Kerr effect. The information is reproduced by detecting a rotation of this polarizing plane. In a state where a magnetic field smaller than a coercive force at a normal temperature is applied, a temperature is increased in the vicinity of a Curie temperature enough to reduce the coercive force by irradiating the perpendicular magnetizing film with a convergent beam having a larger power than in the reproduction. Then, the magnetization takes place towards the applied magnetic field. Based on this principle, a write of a micro magnetic domain is performed, thus recording the information. A spot of the convergent beam can be set to 1 micrometer or under. Hence, the magneto-optical disk makes a high density storage possible.

Problems to be solved by the Invention:

However, a much larger capacity storage medium is needed for effecting digital recording of image information, especially of a motion picture. The recording density is further increased to respond to a demand for decreasing a medium size. In the case of the magneto-optical disk, the recording density is determined by a spot diameter of the convergent beam. If a laser beam is employed as a source of the convergent beam, the spot diameter can be contracted down to a diffraction limit and is determined by a wavelength of the laser beam and by the NA of a lens for convergence. To reduce the spot diameter, a value of NA may be increased. To secure a constant working distance, a lens diameter increases. Hence, there is a limit in terms of utilization. An as -employed lens diameter is 0.50 - 0.55, and the upper limit thereof is, it can be said, 0.65 - 0.70. When shortening the wavelength of the laser beam, the spot diameter is reduced. It is required that a semiconductor laser be used as a laser beam source to reduce a size of an optical head. Shortening of the wavelength is not, however, easily attained. Particularly, a short wavelength laser having a high and a long life is difficult of ulilization thereof. An objective for the time being is to decrease the as-employed wavelength of 780 nm down to 670 nm.

It is very difficult to further increase the capacity of the optomagnetic disk on the line of extension of the prior art.

Disclosure of the Invention:

A magneto-optical recording medium according to the precharacterizing clause of claim 1 is disclosed in JP-A-1-149245. In this prior art the individual film layers are stacked upon one another via respective non-magnetic films. Recording is arbitrarily executed in the film thickness direction of the recording film by changing the direction and magnitude of an external magnetic field in synchronization with the Curie temperature of the respective film layers at the time when the temperature falls.

The present invention aims at making multi-layer recording possible to increase the capacity of the magneto-optical disk without waiting for shortening of the wavelength of the laser and adoption of lenses of larger NA (numerical aperture). Another object of the invention is to provide a method of recording and a method of reproducing information stored in such recording medium.

These objects are achieved with a magneto-optical medium, a method of reproducing information and a method of recording information, respectively, as claimed.

Brief Description of the Drawings:

FIG. 1 is a schematic diagram illustrating a magneto-optical recording medium of this invention;
FIG. 2 is a schematic diagram showing a recording layer of the magneto-optical recording medium of this invention;

FIG. 3 is a schematic diagram illustrating recording layers of a conventional magneto-optical recording medium;

FIG. 4 is a schematic diagram showing a state where recording and reproducing are performed;

FIG. 5 is a schematic diagram showing a recording method on the magneto-optical recording medium of this invention;

FIG. 6 is a schematic diagram showing a recording method based on a light modulation of the magneto-optical recording medium of this invention; and

FIG. 7 is a schematic diagram showing a reproducing method of the magneto-optical recording medium of this invention:

Best Mode for Carrying out the Invention:

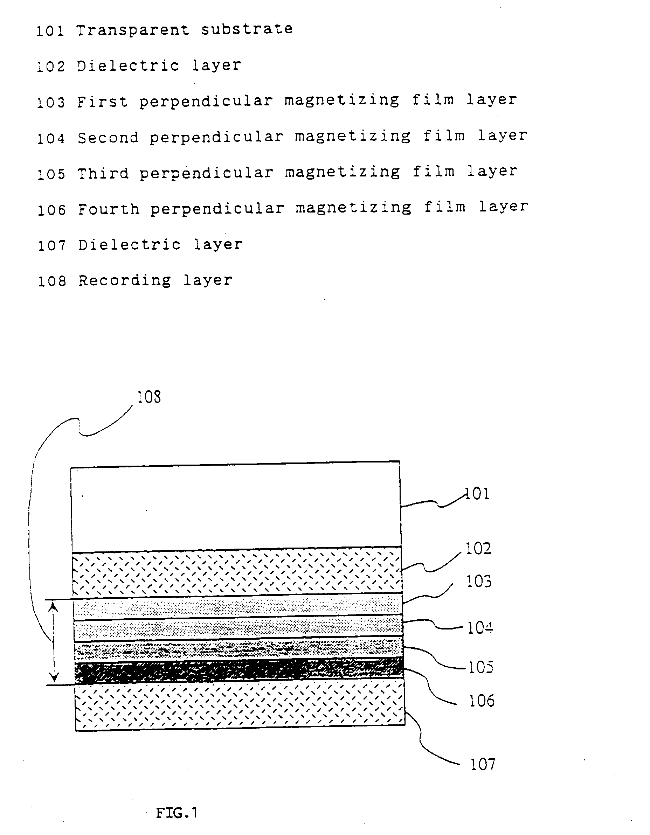

An embodiment of the present invention will be explained with reference to the drawings. FIG. 1 is a schematic diagram showing one embodiment of this invention. Formed is a dielectric layer 102 contacting with a transparent substrate 101. A first perpendicular magnetizing film layer 103 contacting with the dielectric layer 102 is formed. Further formed are a second perpendicular magnetizing film layer 104, a third perpendicular magnetizing film layer 105 and a fourth perpendicular magnetizing film layer 106. A dielectric layer 107 contacting with the fourth perpendicular magnetizing film layer is formed. The layers associated with recording of information in the form of magnetic domain pattern are the first vertical magnetizing film layer 103, the second vertical magnetizing film layer 104, the third vertical magnetizing film layer 105 and the fourth vertical magnetizing film layer 106. It can be said that these layers are combined to form a recording layer 108. The configuration of FIG. 1 may be a structure in which the recording layer 108 is sandwiched in between the dielectric layer 102 and the dielectric layer 107. Besides, the recording layer 108 takes a stacked structure of four perpendicular magnetizing film layers. The 4 layers are herein set in terms of explaining one embodiment of the present invention but do not give a limit to the present invention. An emphasis of this invention is placed on the arrangement that the recording layer 108 is effectively composed of an arbitrary number, 2 or greater, of layers.

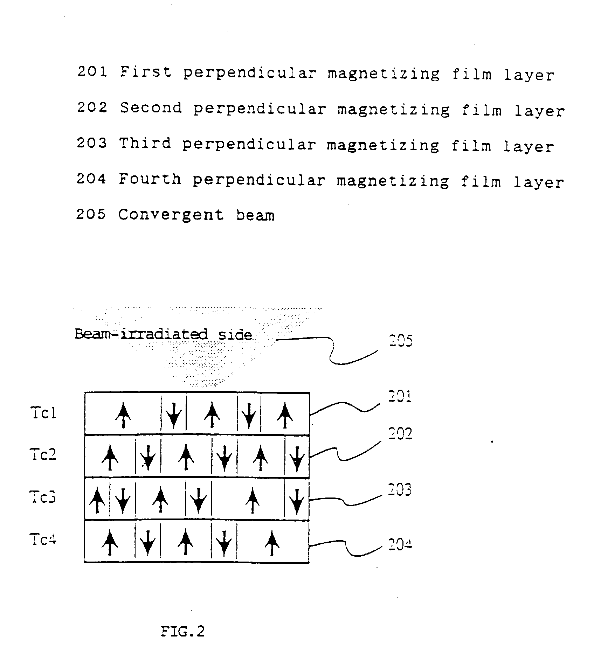

To begin with, what is needed is that Curie temperatures Tc are different from each other, and the perpendicular magnetizing film layers closer to the incident side of a light beam for reproduction have the lower Curie temperatures. This is schematically illustrated in FIG. 2. Stacked are a first perpendicular magnetizing film layer 201, a second perpendicular magnetizing film layer 202, a third perpendicular magnetizing film layer 203 and a fourth perpendicular magnetizing film layer 204 sequentially from the incident side of a convergent beam 205. Respective Curie temperatures are indicated by Tc1, Tc2, Tc3 and Tc4. A relation of each temperature is given as formula 1.

$$\text{Formula 1:} \qquad Tc1 < Tc2 < Tc3 < Tc4$$

This formula is expressible as shown in the fomula 2.

$$\text{Formula 2:} \qquad Tc(n) < Tc(n + 1) \ (1 \leqq n \leqq (NL - 1))$$

where $Tc(n)$ is the Curie temperature of the n-th perpendicular magnetizing film layer, and NL is the number of the perpendicular magnetizing film layers. The n-th perpendicular magnetizing film layer is formed as the n-th perpendicular magnetizing film layer counted from the incident side of the beam.

The adjacent perpendicular magnetizing film layers are magnetically coupled to each other, i.e.,-magnetostatic bonding effected by a leak magnetic field and exchange interaction. Coupling by the latter exchange interaction is dominant over the perpendicular magnetizing films. The exchange interaction implies a relation where a spin orientation of adjacent atoms in the magnetic substance, i.e., the atoms are so arrayed as to be oriented in the same direction or in reverse direction or at a constant angle. Inter atom bonding or inter continuum bonding by this effect is referred to as exchange coupling.

The magnetic film has a coercive force and exhibits such a nature that the magnetization is not inverted in a magnetic field whose level is below that of the coercive force. However, by an exchange-coupling of two types of magnetic films having different levels of coercive force and magnetization, the inverting magnetic field intensity where the magnetization is inverted differs from that in case of a single layer. An explanation will be given on the assumption that there are stacked two kinds of perpendicular magnetizing film layers having coercive forces Hc1, Hc2, magnetic moments Ms1, Ms2 and thicknesses h1, h2. It is required that the formulae 3 and 4 be satisfied to stably form magnetic domains magnetized upwards and downwards on one perpendicular magnetizing film layer even when a magnetizing orientation of the another perpendicuar magnetizing film layer is either upward or downward.

$$\text{Formula 3:} \qquad Hc1 - \sigma w / (2Ms1\ h1) > 0$$

$$\text{Formula 4:} \qquad Hc2 - \sigma w / (2Ms2\ h2) > 0$$

where σw is the wall energy when a domain wall is formed between the two perpendicular magnetizing films.

Similarly, it is required that relations of the formulae 5 and 6 be met to stably form magnetic domains magnetized upwards and downwards on the n-th perpendicular magnetizing film layer independently of a magnetizing state of an (n-1)th perpendicular magnetizing film layer or an (n+1)th perpendicular magnetizing film layer in a magneto-optical recording medium.

$$\text{Formula 5:} \quad Hc(n) - \sigma w / (Ms(n)\ h(n)) > 0$$

$$(2 \leqq n \leqq NL - 1)$$

$$\text{Formula 6:} \quad Hc(n) - \sigma w / (2Ms(n)\ h(n)) > 0$$

$$(n = 1, NL)$$

where $Hc(n)$ is the coercive force of the n-th perpendicular magnetizing film layer, $Ms(n)$ is the magnetic moment and $h(n)$ is the thickness.

A relatively large coercive force can be obtained in alloys of rare-earth metals of Gd, Tb, Dy and transition metals of Fe, Co. When substituting typical values such as $Ms = 50$ kA/m, $\sigma w = 1.5$erg/cm$^2$ ($1.5 \cdot 10^{-7}$j/cm$^2$) and $h = 1000$ X $10^{-8}$ cm, it proves that the formulae 5 and 6 are satisfied on condition that Hc is 3k$\theta$e ($\frac{30}{4\pi}$A/cm) or more. This value is in such a range as to be obtained by the magnetic film of a rare-earth metal - transition metal alloy. In this embodiment also, the recording film is composed of the rare-earth metal - transition metal alloy.

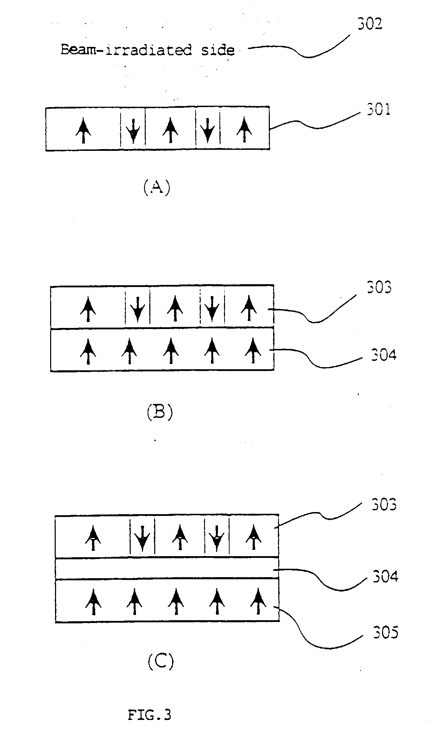

The present invention aims at improving a storage capacity of the magneto-optical recording medium. This object is accomplished by, as illustrated in FIG. 2, recording different information on the respective perpendicular magnetizing film layers constituting the recording layer. Arrowheads herein indicate magnetizing orientations. In an conventional magneto-optical recording medium, as illustrated in FIG. 3(A), the layer on which the information is recorded is a single perpendicular magnetizing film layer 301. As disclosed in Japanese patent Application Nos.: 175948/1987 and 239636/1988, there exist magneto-optical recording mediums in which two or more magnetic films are exchange-coupled with each other. These mediums are demonstrated by FIGS. 3 (B) and 3(C). In any medium, the information is merely recorded on a first layer 303 closest to the incident side of the beam. In these examples, a second layer 304 and a third layer 305 are nothing but auxiliary layers for an overwrite by light modulation. These layers have not a function to hold the information. As seen in Japanese Patent Laid-Open No.:276731/1989, the information is recorded on the second layer by a magnetic head for a magnetic field modulation, and the information on the second layer is transferred onto the first layer. The first layer also holds the information. The information on the second layer becomes unnecessary after being transferred onto the first layer. This information is rewritten by the magnetic head. Namely, in this conventional example, the transfer is merely carried out as one process of recording.

Based on the prior art, as discussed above, the information is recorded on the first layer closest to the incident side of the beam on the medium. In contrast, according to the present invention, the information is recorded and held not only on the first but also on the second and subsequent layers. The following is an explanation of a method of recording the information, as depicted in FIG. 2, on the respective perpendicular magnetizing film layers and a method of reproducing the information recorded on the respective perpendicular magnetizing film layers.

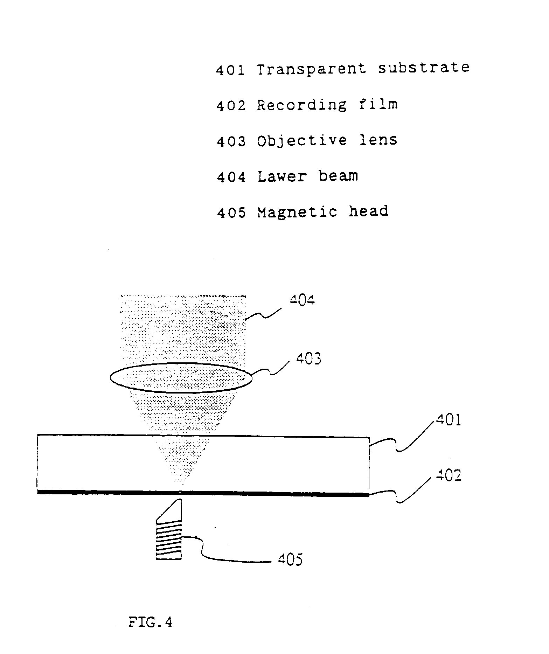

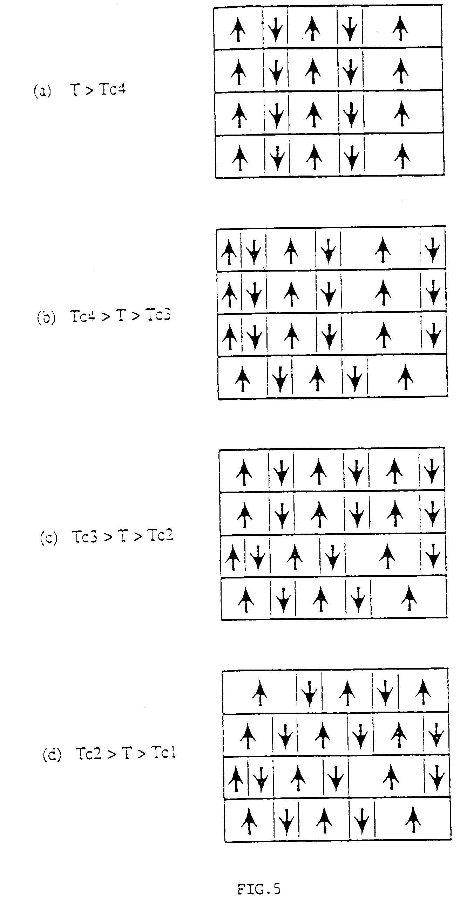

A typical method utilized as a magneto-optical recording mehod is classified into a light modulation method and a magnetic field modulation method. The method based on the magnetic field modulation method will be at first described. In this case, recording is effected based on a constitution shown in FIG. 4. A recording film 402 is formed on a transparent substrate 401. This recording film 402 includes the dielectric layers 102, 107 and the recording layer 108 shown in FIG. 1. A laser beam 404 is focalized on the recording film 402 by a objective lens 403. On the occasion of recording, a power of the laser beam 404 is increased, whereby a temperature of the recording layer in the recording film 402 rises, and recording is performed by the magnetic head 405 modulating the magnetic field. FIG. 5 shows the method of recording the information on in the order of the fourth perpendicular magnetizing film layer, the third layer, the second layer and the first layer in this constitution. The configuration of the 4-layered perpendicular magnetizing films depicted therein is the same as that of FIG. 2. To start with, a power of the laser beam 404 is set to obtain a temperature Tw4 in the vicinity of the Curie temperature Tc4 of the fourth vertical magnetizing film layer or higher than that. The magnetic field is modulated by the magnetic head 405 in accordance with the information to be recorded on the fourth perpendicular magnetizing film layer while effecting continuous irradiation. The relation of the formula 1 is established between the Curie temperatures of the respective layers. Hence, a temperature at a point irradiated with the laser beam is higher than the Curie temperatures of the first, second and third perpendicular magnetizing film layers. The coercive forces of those perpendicular magnetizing film layers are zero. The coercive force of the fourth perpendicular magnetizing film layer becomes considerably small. For this reason, all the perpendicular magnetizing film layers are magnetized towards a write magnetic field applied by the magnetic head 405. In this manner, the desired information is recordable on the fourth perpendicular magnetizing film layer.

Subsequently, a power of the laser beam 404 is set to obtain a temperature Tw3 in the vicinity of the Curie temperature Tc3 and lower than the Curie temperature Tc4 of the fourth perpendicular magnetizing film layer. The magnetic field is modulated by the magnetic head 405 in accordance with the information to be recorded on the third perpendicular magnetizing film layer while effecting continuous irradiation. The temperature at the point irradiated with the laser beam is higher than the Curie temperatures Tc1, Tc2 of the first and second perpendicular magnetizing film layers from the relation of the formula 1 established at the Curie temperatures of the respective layers. The coercive forces of those perpendicular magnetizing film layers are zero. The coercive force of the third perpendicular magnetizing film layer is also considerably small. For this reason, the first, second and third perpendicular magnetizing film layers are magnetized towards the write magnetic field applied by the magnetic head 405. At that time, it is required that the formula 7 be met with respect to the write magnetic field Hw, the magnetic moment Ms4(Tw3) and the coercive force Hc4(Tw3) of the fourth perpendicular magnetizing film layer at the temperature Tw3 not to change the domain pattern of the fourth perpendicular magnetizing film layer.

$$\text{Formula 7:} \qquad Hw < Hc4(Tw3) - \sigma w34(Tw3) / (2Ms4(Tw3)h4)$$

where $\sigma w34(Tw3)$ is the wall energy for forming a domain wall between the third and fourth perpendicular magnetizing film layers at Tw3, and h4 is the thickness of the fourth perpendicular magnetizing film layer. The exchange interaction is exerted from the fourth perpendicular magnetizing film layer onto the first, second and third perpendicular magnetizing films. It is required to meet the formula 8 with respect to the write magnetic field Hw necessary for writing an arbitrary magnetic domain on the first, second and third perpendicular magnetizing films by overcoming the exchange interaction. It is also necessary to satisfy the formula 9 to make the written magnetic domain stable.

$$\text{Formula 8:} \qquad Hw > Hc3(Tw3) + \sigma w34(Tw3) / (2\,Ms3(Tw3)H3)$$

$$\text{Formula 9:} \qquad Hc3(Tw3) > \sigma w34(Tw3) / (2Ms3(Tw3)h3)$$

where Hc3(Tw3), Ms3(Tw3), h3 are the coercive force, the magnetic moment, the thickness of the third perpendicular magnetizing film layer at the temperature respectively.

Namely, if such a temperature and write magnetic field as to meet the formulae 7, 8 and 9 are applied the magnetic domain of the fourth perpendicular magnetizing film layer does not change, and arbitrary magnetic domain patterns are writable on the first, second and third perpendicular magnetizing film layers. This state is demonstrated by FIG. 5(b).

Similarly, if such a temperature Tw2 and write magnetic field Hw as to satisfy the formulae 10, 11 and 12 are selected, the magnetic domain patterns of the third and fourth perpendicular magnetizing film layers do not vary. An arbitrary magnetic domain pattern is writable on the first and second perpendicular magnetizing film layers.

Herein, Hc2(Tw2), Ms2(Tw2), h2 are the coercive force, the magnetic moment, the thickness of the second perpendicular magnetizing film layer at the temperature Tw2 respectively, and $\sigma w23(Tw2)$ is the wall energy for forming a domain wall between the second and third perpendicular magnetizing film layers. This state is demonstrated by FIG. 5(c).

$$\text{Formula 10:} \qquad Hw < Hc3(Tw2) - \sigma w23(Tw2) / (2Ms3(Tw2)\,h3)$$

$$\text{Formula 11:} \qquad Hw > Hc2(Tw2) + \sigma w23(Tw2) / (2Ms2(Tw2)\,h2)$$

$$\text{Formula 12:} \qquad Hc2(Tw2) > \sigma w23(Tw2) / (2Ms2(Tw2)\,h2)$$

Similarly, if such a temperature Tw1 and write magnetic field Hw as to meet the formulae 13, 14 and 15 are selected, the magnetic domain patterns of the second, third and fourth perpendicular magnetizing film layers do not change. An arbitrary magnetic domain pattern is writable on the first perpendicular magnetizing film layer. Herein Hc1(Tw1), Ms1(Tw1), h1 are the coercive force, the magnetic moment, the thickness of the first perpendicular magnetizing film layer at the temperature Tw1 respectively, and $\sigma w12(Tw1)$ is the wall energy for forming a domain wall between the first and second vertical magnetizing film layers. This state is demonstrated by FIG. 5(d).

$$\text{Formula 13:} \qquad Hw < Hc2(Tw1) - \sigma w12(Tw1) / (2Ms2(Tw1)\,h2)$$

$$\text{Formula 14:} \qquad Hw > Hc1(Tw1) + \sigma w12(Tw1) / (2Ms1(Tw1)\,h1)$$

$$\text{Formula 15:} \qquad Hc1(Tw1) > \sigma w12(Tw1) / (2Ms1(Tw1)\,h1)$$

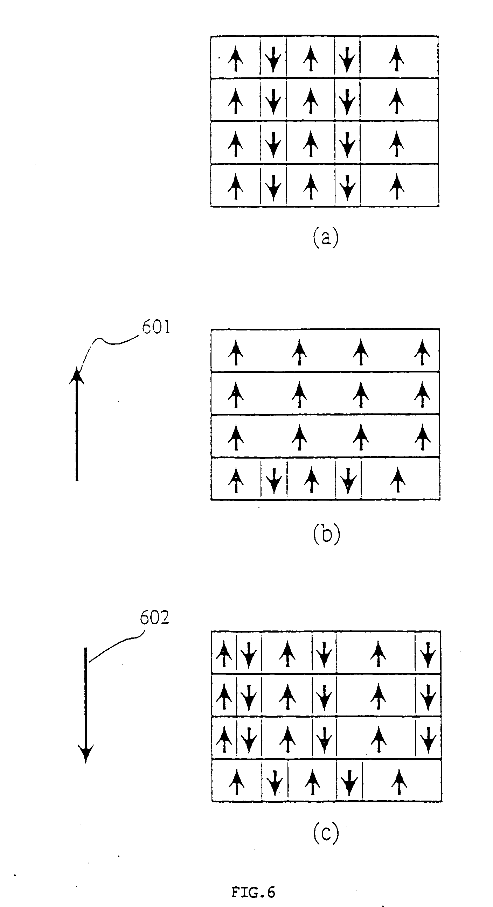

With the procedures given above, the information can be written on the respective perpendicular magnetizing film layers. In this example, the write magnetic field is modulated, but recording can be also performed by light modulation. In that case, an erasing process is needed. FIG. 6 shows one example thereof. Referring to FIG. 6, there are shown a beginning state where recording on the fourth perpendicular magnetizing film layer has already been finished illustrated in FIG. 6(a), and shows a process of writing an arbitrary magnetic domain pattern on the third perpendicular magnetizing film layer. When rising the temperature Tw3 by applying an erase magnetic field 601 upwards with such a magnitude Hw as to meet the formulae 7, 8 and 9, as illustrated in FIG. 6(b), the first second and third perpendicular magnetizing film layers are magnetized uniformly upwards, i.e., erased. When partially rising the temperature Tw3 by modulating the beam with the magnitude Hw and the downward recording magnetic field 602, that portion is magnetized downwards, and it follows that, as illustrated in FIG. 6(c), a desired magnetic domain pattern is recorded on the third perpendicular magnetizing film layer. The magnetic domain patterns can be recorded on other perpendicular magnetizing film layers in the same way.

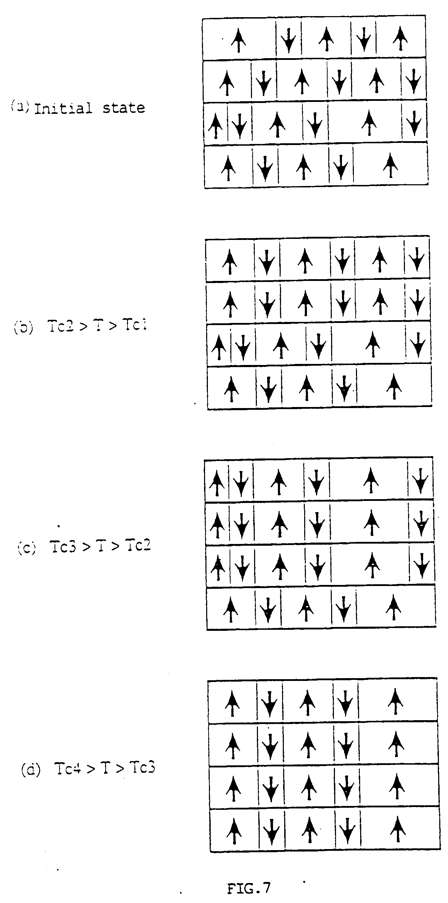

Next, a reproducing method will be described. When the magneto-optical recording medium is irradiated with linear polarized light, the reproduction is effected by utilizing a Kerr effect in which a polarizing plane of the reflected light thereof rotates corresponding to a state of magnetization of the medium. The Kerr effect is, however, determined depending on the magnetizing state in the vicinity of the plane where the reflection takes place. Hence, in general, only the information on the perpendicular magnetizing film layer closest to the incident side of the beam can be read. FIG. 7 shows a method of reproducing the information recorded sequentially on the first, second, third and fourth perpendicular magnetizing film layers. The explanation will hereinafter be given with reference to FIG. 7.

At the first onset, the information on the first perpendicular magnetizing film layer is reproduced. A content thereof is stored temporarily in other storage unit or in other region on the same medium. Subsequently, a power of the laser beam is set to obtain such a temperature Tr2 as to meet the formulae 16 and 17, and continuous irradiation is performed.

Formula 16:     $Hc1(Tr2) < \sigma w12(Tr2) / (2\ Ms1(Tr2)\ h1)$

Formula 17:     $Hc2(Tr2) > (\sigma w12(Tr2) + \sigma w23(Tr2)) / (2Ms2(Tr2)\ h2)$

The relations of the formulae 16 and 17 are conditions for transferring the magnetic domain pattern of the second perpendicular magnetizing film layer onto the first perpendicular magnetizing film layer without changing the magnetic domain pattern on the second perpendicular magnetizing film layer. The temperature is increased up to Tr2, whereby the information on the second perpendicular magnetizing film layer is transferred onto the first perpendicular magnetizing film and is reproducible by the reflected light. Reproduction is attained while being transferred. The reproduced information is temporarily stored in other storage unit or in other region on the same medium. A power of the beam is again set to acquire such a temperature Tr3 as to satisfy the formulae 18 and 19, and the continuous irradiation is carried out.

Formula 18:     $Hc2(Tr3) < \sigma w23(Tr3) / (2\ Ms2(Tr3)\ h2)$

Formula 19:     $Hc3(Tr3) > (\sigma w23(Tr3) + \sigma w34(Tr3)) / (2Ms3(Tr3)\ h3)$

Relations of the formulae 18 and 19 are conditions for transferring the magnetic domain pattern of the third perpendicular magnetizing film layer onto the first and second perpendicular magnetizing film layer without changing the magnetic domain pattern on the third perpendicular magnetizing film layer. The information on the third perpendicular magnetizing film layer is transferred onto the first perpendicular magnetizing film layer by rising the temperature up to Tr3 and is reproducible by the reflected light. Reproduction is attainable while being transferred. The reproduced information is temporarily stored in other storage unit or in other region on the same medium.

Further, a power of the laser beam is again set to obtain such a temperature Tr4 as to meet the formulae 20 and 21, and the continuous irradiation is executed.

Formula 20:     $Hc3(Tr4) < \sigma w34(Tr4) / (2\ Ms3(Tr4)\ h3)$

Formula 21:     $Hc4(Tr4) > (\sigma w34(Tr4)) / (2\ Ms4(Tr4)\ h4)$

Relations of the formulae 20 and 21 are conditions for transferring the magnetic domain pattern of the fourth perpendicular magnetizing film layer onto the first, second and third perpendicular magnetizing film layer without changing the magnetic domain pattern on the fourth perpendicular magnetizing film layer. The information on the fourth perpendicular magnetizing film layer is transferred onto the first perpendicular magnetizing film by rising the temperature up to Tr4 and is reproducible by the reflected light. The reproduction is attainable while being transferred. When the reproduction of the desired layer is done, however, the information on the layers closer to the incident side of the beam than this layer are lost and therefore stored temporarily in the storage unit or in other region on the same medium. After being reproduced, it is necessary to perform rerecording. Rerecording may be based on the recording method explained before. Excepting the magneto-optical recording medium of this invention, the magneto-optical reproducing method of this invention is applicable to a structure having 2 or more perpendicular magnetizing film layers exchange-coupled and to the arrangement that the function to hold the information exists in layers deeper than the first layer.

To promote the transfer during the reproduction, the perpendicular magnetizing film layers closer to the incident side of the beam than the desired perpendicular magnetizing film layer can be magnetized uniformly in one direction, or a proper magnetic field can be applied and is also effective during the transfer.

Employed as another embodiment is such a structure that magnetic film layers having no magnetic anisotropy are interposed between the two perpendicular magnetizing film layers, or magnetic film layers having the magnetic anisotropy in a direction other than the direction perpendicular to the film plane is interposed therebetween. The wall energy $\sigma w$ when causing a domain wall between the two perpendicular magnetizing films is relatively as large as 1.5 - 3erg/cm$^2$ (1.5-3·10$^{-7}$j/cm$^2$). To meet the condition of the formula 21 from the formula 5, the thickness of each layer is required to be relatively large. When using a rare-earth metal - transition metal alloy, a thickness of 100 nm or greater is needed in the great majority of cases. The wall energy $\sigma w$ can be reduced down to 0.5 - 1.2erg/cm$^2$ (0.5-1.2·10$^{-7}$j/cm$^2$) by inserting non-perpendicular magnetizing film layers in positions where the domain walls are formed. The thickness of each layer is also decreased. Expanded are ranges of the magnitude of the write magnetic field, the temperature during the recording process and the temperature during the reproducing process, thereby facilitating the recording/reproducing processes.

The information can be recorded on and reproduced from the perpendicular magnetizing film layers deeper than the first layer in the arbitrary number of perpendicular magnetizing film layers thus stacked. This embodiment has dealt with the 4-layered structure. The recording method and the reproducing method discussed herein can be performed irrespective of the number of layers. Hence, the present invention can be actualized by an arbitrary plural number of layers. Besides, even if multi-layer recording as in the magneto-optical recording medium of this invention is not desired, the magneto-optical reproducing method or the optomagnetic recording method according to the present invention is usable in such cases that the structure is obtained by the 2 or more magnetizing films exchange-coupled, and the information holding function exists in the layers deeper than the first layer.

**Claims**

1. A magneto-optical recording medium from which recorded information is reproducible, in response to light irradiation, in the form of an angle of a polarization plane of reflected light, said medium having a recording film comprising NL (NL $\geq$ 2) perpendicular magnetizing film layers (103-106) stacked upon one another wherein $Tc_n < Tc_{n+1}$ (1 $\leq$ n $\leq$ NL-1) when $Tc_n$ is the Curie temperature of an n-th film layer and $Tc_{n+1}$ that of the adjacent (n + 1)-th film layer, the n-th film layer being the one of the two film layers nearer to a light incident side of said medium, wherein both, a magnetic domain magnetized upwards and a magnetic domain magnetized downwards, can be formed in said film layers irrespective of the orientation, upward or downward, of magnetic domains in adjacent film layers at room temperature,

   characterized in that,

   said film layers are exchange-coupled with the adjacent film layers and the following conditions are met:

$$Hc_n - \sigma w/Ms_n h_n > 0, \ 2 \leq n \leq NL\text{-}1$$

$$Hc_n - \sigma w/2Ms_n h_n > 0, \ n = 1, NL$$

   wherein

   $Hc_n$ is the coercive force of the n-th film layer,
   $Ms_n$ is its magnetic moment,
   $h_n$ is its thickness, and
   $\sigma w$ is the wall energy when a domain wall is formed between two adjacent film layers.

2. The magneto-optical recording medium as set forth in claim 1, wherein magnetic film layers and said perpendicular magnetizing film layers are exchange-coupled based on such a structure that said magnetic film layers having no magnetic anisotropy or said magnetic film layer having the magnetic anisotropy in a direction other than the direction perpendicular to the film plane are interposed between said adjacent perpendicular magnetizing film layers.

3. A method of reproducing information stored in an n-th film layer (2 $\leq$ n $\leq$ NL) of the magneto-optical recording medium according to claim 1 or 2, said method comprising the steps of:

   (a) irradiating the light irradiation side of said medium with a beam of a power to raise the temperature of the recording film to such a value $Tr_n$ as to fulfil the following conditions:

$$Hc_{n-1}(Tr_n) < \sigma w_{n-1,n}(Tr_n)/2Ms_{n-1}(Tr_n)h_{n-1},$$

   and

$$Hc_n(Tr_n) > [\sigma w_{n-1,n}(Tr_n) + \sigma w_{n,n+1}(Tr_n)]/2Ms_n(Tr_n)h_n \text{ for } n < NL$$

or

$$Hc_n(Tr_n) > \sigma w_{n-1,n}(Tr_n)/2Ms_n(Tr_n)h_n \text{ for } n = NL,$$

thereby transferring the magnetic domain pattern recorded in the n-th film layer to the first film layer closest to said light irradiation side, and
(c) reproducing the information from the first film layer,

wherein:

$Hc_n(Tr_n)$ is the coercive force of the n-th film layer at temperature $Tr_n$,
$Ms_n(Tr_n)$ is its magnetic moment at temperature $Tr_n$, and
$\sigma w_{n-1,n}(Tr_n)$ is the wall energy when a domain wall is formed between the (n-1)-th film layer and the n-th film layer.

4. A method of recording information into an n-th film layer $(1 \leq n \leq NL\text{-}1)$ of the magneto-optical recording medium according to claim 1 or 2, said method comprising the steps of:

(a) applying a magnetic field $Hw_n$ modulated in accordance with data, and
(b) irradiating the light irradiation side of said medium with a continuous beam of a power to raise the temperature of the recording film to such a value $Tw_n$ as to fulfil the following conditions:

$$Hw_n < Hc_{n+1}(Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n)h_n,$$

$$Hc_n(Tw_n) > \sigma w_{n,n+1}(Tw_n)/2Ms_n(Tw_n)h_n,$$

wherein:

$Hc_n(Tw_n)$ is the coercive force of the n-th film layer at temperature $Tw_n$,
$Ms_n(Tw_n)$ is its magnetic moment at temperature $Tw_n$, and
$\sigma w_{n-1,n}(Tw_n)$ is the wall energy when a domain wall is formed between the (n-1)-th film layer and the n-th film layer at temperature $Tw_n$.

5. A method of recording information into an n-th film layer $(1 \leq n \leq NL\text{-}1)$ of the magneto-optical recording medium according to claim 1 or 2, said method comprising the steps of:

(a) applying an definite erasing magnetic field $Hw_n$,
(b) irradiating the light irradiation side of said medium with a continuous beam of a power to raise the temperature of the recording film to such a value $Tw_n$ as to fulfil the following conditions:

$$Hw_n < Hc_{n+1}(Tw_n) - \sigma w_{n,n+1}(Tw_n)/2Ms_{n+1}(Tw_n)h_{n+1}$$

$$Hw_n > Hc_n(Tw_n) + \sigma w_{n,n+1}(Tw_n)/2Ms_n(Tw_n)h_n$$

$$Hc_n(Tw_n) > \sigma w_{n,n+1}(Tw_n)/2Ms_n(Tw_n)h_n,$$

wherein:

$Hc_n(Tw_n)$ is the coercive force of the n-th film layer at temperature $Tw_n$,
$Ms_n(Tw_n)$ is its magnetic moment at temperature $Tw_n$,
$\sigma w_{n-1,n}(Tw_n)$ is the wall energy when a domain wall is formed between the (n-1)-th film layer and the n-th film layer,
(c) applying an definite recording magnetic field $Hw_n$ which is opposite to said erasing magnetic field, and
(d) irradiating the light irradiation side of said medium with a beam modulated in accordance with data of a power to raise the temperature of the recording film to such a value $Tw_n$ as to fulfil the following conditions:

$$Hw_n < Hc_{n+1} (Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n)h_n,$$

$$Hc_n(Tw_n) > \sigma w_{n,n+1}(Tw_n)/2Ms_n(Tw_n)h_n,$$

thereby to partially raise the temperature of the recording film in accordance with the modulation.

**Patentansprüche**

1. Magneto-optisches Aufzeichnungsmedium, von dem aufgezeichnete Information als Reaktion auf Lichtbestrahlung in der Form eines Winkels einer Polarisationsebene reflektierten Lichts wiedergebbar ist, wobei das Medium einen Aufzeichnungsfilm aufweist, der NL (NL ≥ 2) senkrecht magnetisierbare Filmschichten (103-106) umfaßt, die aufeinander gestapelt sind, wobei $Tc_n < Tc_{n+1}$ ($1 \le n \le$ NL-1), wenn $Tc_n$ die Curie-Temperatur einer n-ten Filmschicht ist und $Tc_{n+1}$ die der benachbarten (n+1)-ten Filmschicht ist, die n-te Filmschicht diejenige der beiden Filmschichten ist, die einer Lichteinfallseite des Mediums näherliegt, wobei sowohl eine aufwärtsmagnetisierte magnetische Domäne als auch eine abwärts magnetisierte magnetische Domäne in den Filmschichten ungeachtet der Orientierung, aufwärts oder abwärts, der magnetischen Domänen in benachbarten Filmschichten bei Raumtemperatur ausgebildet werden kann,

dadurch gekennzeichnet,

daß die Filmschichten mit benachbarten Filmschichten austauschgekoppelt sind und die folgenden Bedingungen erfüllt sind:

$$Hc_n - \sigma w/Ms_n h_n > 0, \quad 2 \le n \le NL\text{-}1$$

$$Hc_n - \sigma w/2Ms_n h_n > 0, \quad n = 1, NL$$

wobei

$Hc_n$ die Koerzitivkraft der n-ten Filmschicht ist,
$Ms_n$ ihr magnetisches Moment ist,
$h_n$ ihre Dicke ist, und
$\sigma w$ die Wandenergie ist, wenn eine Domänenwand zwischen zwei benachbarten Filmschichten gebildet wird, sind.

2. Magneto-optisches Aufzeichnungsmedium nach Anspruch 1, bei dem magnetische Filmschichten und die senkrecht magnetisierbaren Filmschichten auf der Basis einer solchen Struktur austauschgekoppelt sind, daß die magnetischen Filmschichten, die keine magnetische Anisotropie aufweisen, oder die magnetischen Filmschichten, die die magnetische Anisotropie in einer anderen Richtung als der Richtung senkrecht zur Filmebene aufweisen, zwischen die benachbarten senkrecht magnetisierbaren Filmschichten zwischengesetzt sind.

3. Verfahren der Wiedergabe von Information, die in einer n-ten Filmschicht ($2 \le n \le$ NL) des magneto-optischen Aufzeichnungsmediums von Anspruch 1 oder 2 gespeichert ist, wobei das Verfahren die Schritte umfaßt:

(a) Bestrahlen der Lichteinfallseite des Mediums mit einem Strahl einer Leistung zur Erhöhung der Temperatur des Aufzeichnungsfilms auf einen solchen Wert $Tr_n$, um die folgenden Bedingungen zu erfüllen:

$$Hc_{n-1}(Tr_n) < \sigma w_{n-1,n}(Tr_n)/2Ms_{n-1}(Tr_n)h_{n-1},$$

und

$$Hc_n(Tr_n) > [\sigma w_{n-1,n}(Tr_n) + \sigma w_{n,n+1}(Tr_n)]/2Ms_n(Tr_n)h_n \text{ für } n < NL$$

oder

$$Hc_n(Tr_n) > \sigma w_{n-1,n}(Tr_n)/2Ms_n(Tr_n)h_n \text{ für } n = NL,$$

wodurch das in der n-ten Filmschicht aufgezeichnete magnetische Domänenmuster auf die der Lichtbestrahlungsseite nächstliegende erste Filmschicht übertragen wird, und

(c) Wiedergabe der Information von der ersten Filmschicht,
   wobei:

$Hc_n(Tr_n)$ die Koerzitivkraft der n-ten Filmschicht bei der Temperatur $Tr_n$ ist,

$Ms_n(Tr_n)$ sein magnetisches Moment bei der Temperatur $Tr_n$ ist, und

$\sigma w_{n-1,\,n}(Tr_n)$ die Wandenergie ist, wenn eine Domänenwand zwischen der (n-1)-ten Filmschicht und der n-ten Filmschicht gebildet wird.

4.  Verfahren der Aufzeichnung von Information in eine n-te Filmschicht ($1 \leq n \leq NL-1$) des magneto-optischen Aufzeichnungsmediums nach Anspruch 1 oder 2, wobei das Verfahren die Schritte umfaßt:

(a) Anlegen eines Magnetfeldes $Hw_n$, das entsprechend Daten moduliert ist, und
(b) Bestrahlen der Lichtbestrahlungsseite des Mediums mit einem kontinuierlichen Strahl einer Leistung zur Erhöhung der Temperatur des Aufzeichnungsfilms auf einen solchen Wert $Tw_n$ zur Erfüllung der nachfolgenden Bedingungen.

$$Hw_n < Hc_{n+1}(Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n)h_n,$$

$$Hc_n(Tw_n) > \sigma w_{n,n+1}(Tw_n)/2Ms_n(Tw_n)h_n,$$

   wobei:

$Hc_n(Tw_n)$ die Koerzitivkraft der n-ten Filmschicht bei der Temperatur $Tw_n$ ist,

$Ms_n(Tw_n)$ sein magnetisches Moment bei der Temperatur $Tw_n$ ist, und

$\sigma w_{n-1,\,n}(Tw_n)$ die Wandenergie ist, wenn eine Domänenwand zwischen der (n-1)-ten Filmschicht und der n-ten Filmschicht bei der Temperatur $Tw_n$ gebildet wird.

5.  Verfahren der Aufzeichnung von Information in eine n-te Filmschicht ($1 \leq n \leq NL-1$) des magneto-optischen Aufzeichnungsmediums nach Anspruch 1 oder 2, wobei das Verfahren die Schritte umfaßt:

(a) Anlegen eines definierten Löschmagnetfeldes $Hw_n$,
(b) Bestrahlen der Lichtbestrahlungsseite des Mediums mit einem kontinuierlichen Strahl einer Leistung zur Erhöhung der Temperatur des Aufzeichnungsfilms auf solch einen Wert $Tw_n$ zur Erfüllung der folgenden Bedingungen:

$$Hw_n < Hc_{n+1}(Tw_n) - \sigma w_{n,n+1}(Tw_n)/2Ms_{n+1}(Tw_n)h_{n+1}$$

$$Hw_n > Hc_n(Tw_n) + \sigma w_{n,n+1}(Tw_n)/2Ms_n(Tw_n)h_n$$

$$Hc_n(Tw_n) > \sigma w_{n,n+1}(Tw_n)/2Ms_n(Tw_n)h_n,$$

   wobei:

$Hc_n(Tw_n)$ die Koerzitivkraft der n-ten Filmschicht bei der Temperatur $Tw_n$ ist,

$Ms_n(Tw_n)$ sein magnetisches Moment bei der Temperatur $Tw_n$ ist, und

$\sigma w_{n-1,\,n}(Tw_n)$ die Wandenergie ist, wenn eine Domänenwand zwischen der (n-1)-ten Filmschicht und der n-ten Filmschicht gebildet wird,
(c) Anlegen eines definierten Aufzeichnungsmagnetfeldes $Hw_n$, das dem Löschmagnetfeld entgegengesetzt ist, und
(d) Bestrahlen der Lichtbestrahlungsseite des Mediums mit einem kontinuierlichen Strahl einer Leistung zur Erhöhung der Temperatur des Aufzeichnungsfilms auf einen solchen Wert $Tw_n$ zur Erfüllung der nachfolgenden Bedingungen:

$$Hw_n < Hc_{n+1}(Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n)h_n,$$

$$Hc_n(Tw_n) > \sigma w_{n,n+1}(Tw_n)/2Ms_n(Tw_n)h_n,$$

um dadurch die Temperatur des Aufzeichnungsfilms nach Maßgabe der Modulation teilweise zu erhöhen.

## Revendications

1. Support d'enregistrement magnéto-optique à partir duquel des informations enregistrées sont reproductibles, en réponse à une exposition à la lumière, sous la forme d'un angle d'un plan de polarisation de lumière réfléchie, le support ayant un film d'enregistrement comprenant NL (NL $\geq$ 2) couches (103 à 106) de film magnétisant perpendiculaires empilées les unes sur les autres, dans lequel $Tc_n < Tc_{n+1}$ ($1 \leq n \leq$ NL-1) lorsque $Tc_n$ est la température de Curie d'une $n^{ième}$ couche de film et $Tc_{n+1}$ celle de la (n+1)$^{ième}$ couche de film adjacente, la $n^{ième}$ couche de film étant la couche de film, parmi les deux couches de film, qui est la plus proche d'un côté incident lumineux du support, dans lequel à la fois, un domaine magnétique magnétisé vers le haut et un domaine magnétique magnétisé vers le bas, peuvent être formés dans les couches de film sans tenir compte de l'orientation, ascendante ou descendante, des domaines magnétiques des couches de film adjacentes à température ambiante,
caractérisé en ce que,
les couches de film sont accouplées par échange aux couches de film adjacentes et les conditions suivantes sont remplies :

$$Hc_n - \sigma w / Ms_n h_n > 0, 2 \leq n \leq NL\text{-}1$$

$$Hc_n - \sigma w / 2Ms_n h_n > 0, n = 1, NL$$

$Hc_n$ étant la force coercitive de la $n^{ième}$ couche de film,
$Ms_n$ étant son moment magnétique,
$h_n$ étant son épaisseur, et
$\sigma w$ étant l'énergie de paroi lorsqu'une paroi de domaine est formée entre deux couches de film adjacentes.

2. Support d'enregistrement magnéto-optique suivant la revendication 1, dans lequel des couches de film magnétiques et les couches de film magnétisant perpendiculaires sont accouplées par échange en se fondant sur une structure telle que les couches de film magnétique n'ayant pas d'anisotropie magnétique ou la couche de film magnétique ayant l'anisotropie magnétique dans un sens autre que le sens perpendiculaire au plan du film sont interposées entre les couches de film magnétisant perpendiculaires adjacentes.

3. Procédé de reproduction d'informations enregistrées dans une $n^{ième}$ couche de film ($2 \leq n \leq$ NL) du support d'enregistrement magnéto-optique selon la revendication 1 ou 2, le procédé comprenant les étapes consistant à :

   (a) exposer le côté d'exposition à la lumière du support. à un faisceau d'une certaine puissance pour élever la température du film d'enregistrement à une valeur $Tr_n$ telle que les conditions suivantes soient remplies :

   $$Hc_{n\text{-}1}(Tr_n) < \sigma w_{n\text{-}1,n}(Tr_n) / 2Ms_{n\text{-}1}(Tr_n) h_{n\text{-}1},$$

   et

   $$Hc_n(Tr_n) > [\sigma w_{n\text{-}1,n}(Tr_n) + \sigma w_{n,n+1}(Tr_n)] / 2Ms_n(Tr_n) h_n \text{ pour } n < NL$$

   ou

   $$Hc_n(Tr_n) > \sigma w_{n\text{-}1,n}(Tr_n) / 2Ms_n(Tr_n) h_n \text{ pour } n = NL,$$

   transférant ainsi la configuration de domaine magnétique enregistrée dans la $n^{ième}$ couche de film à la première couche de film la plus proche du côté d'exposition à la lumière, et
   (b) reproduire les informations de la première couche de film, dans lequel

   $Hc_n(Tr_n)$ est la force coercitive de la $n^{ième}$ couche de film à la température $Tr_n$,
   $Ms_n(Tr_n)$ est son moment magnétique à la température $Tr_n$, et
   $\sigma w_{n\text{-}1,n}(Tr_n)$ est l'énergie de paroi lorsqu'une paroi de Bloch est formée entre la (n-1)$^{ième}$ couche de film et la $n^{ième}$ couche de film.

4. Procédé d'enregistrement d'informations dans une $n^{ième}$ couche de film ($1 \leq n \leq$ NL-1) du support d'enregistrement magnéto-optique selon la revendication 1 ou 2, le procédé comprenant les étapes consistant à :

(a) appliquer un champ magnétique $Hw_n$ modulé suivant des données, et

(b) exposer le côté d'exposition à la lumière du support à un faisceau continu d'une certaine puissance pour élever la température du film d'enregistrement à une valeur $Tw_n$ telle que les conditions suivantes soient remplies:

$$Hw_n < Hc_{n+1}(Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n)h_n,$$

$$Hc_n(Tw_n) > \sigma w_{n,n+1}(Tw_n)/2Ms_n(Tw_n)h_n,$$

dans lequel :

$Hc_n(Tw_n)$ est la force coercitive de la $n^{ième}$ couche de film. à la température $Tw_n$.
$Ms_n(Tw_n)$ est son moment magnétique à la température $Tw_n$, et
$\sigma w_{n-1,n}(Tw_n)$ est l'énergie de paroi lorsqu'une paroi de Bloch est formée entre la $(n-1)^{ième}$ couche de film et la $n^{ième}$ couche de film à la température $Tw_n$.

5. Procédé d'enregistrement d'informations dans une $n^{ième}$ couche de film ($1 \leq n \leq NL-1$) du support d'enregistrement magnéto-optique selon la revendication 1 ou 2, le procédé comprenant les étapes consistant à

(a) appliquer un champ magnétique $Hw_n$. d'effacement bien défini

(b) exposer le côté d'exposition à la lumière du support à un faisceau continu d'une certaine puissance pour élever la température du film d'enregistrement à une valeur $Tw_n$ telle que les conditions suivantes soient remplies:

$$Hw_n < Hc_{n+1}(Tw_n) - \sigma w_{n,n+1}(Tw_n)/2Ms_{n+1}(Tw_n) h_{n+1}$$

$$Hw_n > Hc_n(Tw_n) + \sigma w_{n,n+1}(Tw_n)/2Ms_n(Tw_n)h_n$$

$$Hc_n(Tw_n) > \sigma w_{n,n+1}(Tw_n)/2Ms_n(Tw_n)h_n,$$

dans lequel :

$Hc_n(Tw_{NL-1})$ est la force coercitive de la $n^{ième}$ couche de film à la température $Tw_n$,
$Ms_n(Tw_n)$ est son moment magnétique à la température $Tw_n$,
$\sigma w_{n-1,n}(Tw_n)$ est l'énergie de paroi lorsqu'une paroi de Bloch est formée entre la $(n-i)^{ième}$ couche de film et la $n^{ième}$ couche de film,

(c) appliquer un champ magnétique $Hw_n$ d'enregistrement bien défini qui est opposé au champ magnétique d'effacement, et

(d) exposer le côté d'exposition à la lumière du support à un faisceau modulé suivant les données d'une puissance pour élever la température du film d'enregistrement à une valeur $Tw_n$ telle que les conditions suivantes soient remplies:

$$Hw_n < Hc_{n+1}(Tw_n) - \sigma w_{n,n+1}(Tw_n)/2Ms_{n+1}(Tw_n)h_{n+1},$$

$$Hw_n > Hc_n(Tw_n) + \sigma w_{n,n+1}(Tw_n)/2Ms_n(Tw_n) h_n,$$

$$Hc_n(Tw_n) > \sigma w_{n,n+1}(Tw_n)/2Ms_n(Tw_n)h_n,$$

pour, de cette façon, élever partiellement la température du film d'enregistrement suivant la modulation.

101 Transparent substrate

102 Dielectric layer

103 First perpendicular magnetizing film layer

104 Second perpendicular magnetizing film layer

105 Third perpendicular magnetizing film layer

106 Fourth perpendicular magnetizing film layer

107 Dielectric layer

108 Recording layer

FIG.1

201 First perpendicular magnetizing film layer

202 Second perpendicular magnetizing film layer

203 Third perpendicular magnetizing film layer

204 Fourth perpendicular magnetizing film layer

205 Convergent beam

FIG.2

Beam-irradiated side ——— 302

↑ ↓ ↑ ↓ ↑ ——— 301

(A)

↑ ↓ ↑ ↓ ↑ ——— 303

↑ ↑ ↑ ↑ ↑ ——— 304

(B)

↑ ↓ ↑ ↓ ↑ ——— 303

——— 304

↑ ↑ ↑ ↑ ↑ ——— 305

(C)

FIG.3

401 Transparent substrate

402 Recording film

403 Objective lens

404 Lawer beam

405 Magnetic head

FIG.4

EP 0 478 786 B1

(a) T > Tc4

(b) Tc4 > T > Tc3

(c) Tc3 > T > Tc2

(d) Tc2 > T > Tc1

FIG.5

17

(a)

601

(b)

602

(c)

FIG.6

(a) Initial state

(b) Tc2 > T > Tc1

(c) Tc3 > T > Tc2

(d) Tc4 > T > Tc3

FIG.7